# EUROPEAN PATENT SPECIFICATION

(11) **EP 2 107 783 B1**
(45) Date of publication and mention of the grant of the patent: **11.01.2012**
(21) Application number: 08075264.5
(22) Date of filing: 31.03.2008
(51) Int. Cl.: H04N 1/00, H04M 1/725, G06K 19/07

(54) **Modification of data**
Änderung von Daten
Modification de données

(43) Date of publication of application: 07.10.2009
(73) Proprietor: Vodafone Holding GmbH, 40213 Düsseldorf (DE)
(72) Inventor: Hoeksel, Sebastiaan, 6229 VN Maastricht (NL); van Muijen, Robert, 3555 As (BE)
(74) Representative: Weisbrodt, Bernd

(56) References cited:
- EP-A- 1 300 770
- JP-A- 2003 324 645
- US-A1- 2005 033 848

## Description

The present invention relates to a method for modifying at least a part of data stored on the part of a card-shaped data storage device by using a wireless communication connection between a transceiver device of the data storage device and a transceiver device of a mobile device being operable in a mobile network, which transceiver devices enable a corresponding wireless communication connection.

In the state of the art numerous card-shaped data storage devices are known in different embodiments, for example embodiments having a format according to Secure Digital (SD), Multi Media Card (MMC), Compact Flash (CF), Memory Stick (MS), Smart Media Card (MMD), xD Picture Card (xD) or Universal Flash Storage (USF).

US 2007/0073937 A1 and US 2005/0033848 A1 disclose data storage devices, especially according the so called SD-format respectively SD-standard (SD: Secure Digital), having a transceiver device for a wireless communication connection according to IEEE 802.11 - so called WLAN (WLAN: Wireless LAN; LAN: Local Area Network) - respectively according to Bluetooth. The transceiver device of such data storage device is especially used for uploading data stored on the part of the data storage device - for example digital pictures done with a digital camera - to a device - especially a PC (PC: Personal Computer) or a so called Remote Sharing Server - also having and/or using a transceiver device for a wireless communication connection. US 2005/0033848 A1 discloses an embodiment, where data initially are transmitted from the data storage device to a mobile device operable in a mobile network via Bluetooth. The data are then transmitted from the mobile device to a device in a communication network - especially in a mobile network and/or in the internet - for further usages on part of said device via the mobile network.

US 2005/0033848 A1 also enables the mobile terminal to add new data (e.g. loading a received attachment) to the data storage device via wireless communication. However, there is no disclosure in US 2005/0033848 A1 about modification of existing data in the card-shaped data storage device by the mobile terminal via wireless communication.

The solutions known so far have different drawbacks. For instance so called hotspots, which enable a wireless internet access via WLAN or suchlike standard, are not area-wide present. Thus data transmission, especially a so called Instant Sharing of digital pictures, is not always and every where possible. In addition users normally don't trust public hotspots and also can't trust that data is transmitted to a Sharing Server in fact.

Devices using data storage devices for storage data, especially digital cameras and/or suchlike devices, for example so called mp3-players, normally have no user interface respectively interface which enables a transmission of data complying the users requirements concerning user individual data transmission respectively a data transmission which is adapted to user preferences and/or user needs or a data transmission taking into account the requirements of specific situations.

Data storage devices for storing data usually don't have an own power supply. The power needed for storing data is normally provided from and/or by the device using the data storage device. In doing so the data storage device normally is power supplied only to and/or for certain actions. Thus a digital camera for example enables a power supply only for a specific period after exposure of a picture. The period of the disposed power supply is normally not long enough for data transmission and in addition cause, that data transmission has to occur directly after exposure of a picture.

Due to the relatively badly power supply and also due to the normally absent user interface for especially user individual transmission of data respectively a transmission of data which is adapted to user preferences and/or needs or suchlike transmission of data, are further processes of data on the part of the data storage devices not possible respectively only constricted possible, especially since such processes, for example digital image processing, are normally associated with higher power consumption.

Another problem with the data storage devices known so far is that modification of data stored on the part of the data storage device is difficult, especially since data storage devices normally don't have input respectively output means itself for handling more comprehensive modifications of data. Such more comprehensive modifications preferably comprise at least partially editing data, transforming data, packing respectively compressing data, unpacking respectively uncompressing data and/or providing data with additional information and suchlike modifications.

In view of this state of the art, it is object of the present invention to improve the inventive modification of data, especially in view of an easy and intuitive handling of modifications.

To achieve this object technically, the present invention suggests a method according to claim 1.

The invention is based on the finding, that an improved modification of data can be achieved, particularly with regard to an easy and intuitive handling of modifications, if there is an interface with a picture comprising dialogue for modifying data used according the present invention. The inventive usage of pictures of respectively for the dialogue comprising generating pictures by the storage device and/or downloading pictures to the data storage device from the mobile device facilitates an improved handling for modification of data, especially since such dialogue pictures are the directly adapted to the special behaviors and/or characteristics of the relative storage device. In the case of downloading the pictures of the dialogue to the data storage device from the mobile device via the wireless communication connection between the data storage device and the mobile device, the mobile device is able to download such pictures for the dialogue via the mobile network from a server which is adapted and/or arranged for such services. Said server for example preferably comprises a data base with data for the kind, type and/or producer of the relative data storage device, especially comprising pictures for an inventive picture comprising dialogue.

An advantageous embodiment of the invention is characterized in that said pictures of said dialogue are displayed on part of a display of a device using the data storage device, especially on part of a display of a digital camera using the data storage device. In doing so, the data storage device is preferably provided with input respectively output means, especially for handling more comprehensive modifications of data. Advantageously the inventive interface ensures so, that the handling for modifications of data is adapted to the relative data storage device.

Pictures of said dialogue are preferably displayed on part of a display of the mobile device via the wireless communication connection between the storage device and the mobile device.

Another advantageous embodiment of the invention is characterized in that the modifying of data comprises at least partially editing data, transforming data, packing respectively compressing data, unpacking respectively uncompressing data and/or providing data with additional information. A further advantageous embodiment of the invention is characterized by a usage and or determination of at least one attribute of at least one part of the data as additional information, particularly comprising information of time, information of location, information of utilization and/or suchlike information. In doing so preferably a further improvement concerning an easy and intuitive handling of modifications is given.

A further embodiment of the invention is characterized in that the interface is generated by an administration-application executed on part of the data storage device and/or on part of the mobile device. Another preferred embodiment of the invention is characterized in that the algorithm of the administration-application executed on part of the data storage device and/or on part of the mobile device is stored on part of the data storage device. The algorithm of the administration-application is advantageously received by the mobile device via the wireless communication connection between the mobile device and the data storage device.

Another embodiment of the invention is characterized by a wireless communication connection according to a Bluetooth-standard.

The data preferably represent digital image- and/or sound-information, especially in form of digital photographs.

Another subject of the present invention is a card-shaped data storage device according to claim 11.

A further embodiment of the invention is characterized in that on the part of a storage area for storing data an algorithm based on an administration application which is executable on the part of the mobile device is stored.

Another preferred embodiment of the invention is characterized in an administration-application that offers the possibility for processing data, especially with regard to editing, modifying, transforming, packing respectively compressing, unpacking respectively uncompressing and/or fitting additional information to the data, especially information regarding time, location and/or utilization.

The transceiver device is preferably a transceiver device allowing a wireless communication connection according to a Bluetooth-standard.

The storage area is advantageously realized by the use of at least one flash-memory.

Another preferred embodiment is characterized in that it is card-shaped, particularly designed of a format according to Secure Digital (SD), Multi Media Card (MMC), Compact Flash (CF), Memory Stick (MS), Smart Media Card (MMD), xD Picture Card (xD) or Universal Flash Storage (USF).

A further subject of the present invention is a mobile device according to claim 17. The mobile device is preferably characterized by an administration application executable on the part of the mobile device. A further advantageously embodiment of the invention is characterized in that the algorithm based on the administration-application which is executable on part of the mobile device is stored on the part of a data storage of the mobile device.

The administration application advantageously offers the possibility to process data, especially with regard to editing, transforming, packing respectively compressing, unpacking respectively uncompressing and/or fitting additional information to the data, especially information regarding time, location and/or utilization.

The transceiver device of the mobile device is preferably a transceiver device allowing a wireless communication connection according to a Bluetooth-standard.

In further preferred embodiments of the invention the mobile device (handset) is used as a communication respectively as a processing hub between a digital camera and a remote sharing server.

The data storage device, preferred in a SD-card format respectively standard, comprises of non-volatile reprogrammable memory for storage of the pictures exposed with the camera, a bus/memory controller (SD-bus/memory controller), a local micro controller and a wireless local radio maintaining a continuous link with the handset.

The handset comprises a software client that maintains the wireless link with the data storage device (SD card) and establishes a connection with the remote picture server via the cellular network.

The invention and architecture allows for:
1. modifying or processing the picture taken by the camera by the handset as being a computing platform. The handset can add GPS (location) data where the picture has been taken, add time of day, adapt/remove red eye effect on the picture, add personal data to the file, compress the file to a more suitable size to be viewed on the handset or watermark the file.
2a. modifying the settings or contents of the SD card via a client that resides on the handset. The user interface or feedback for these actions for the camera is done by displaying pictures on the camera-screen which are generated by the SD card itself or downloaded to the SD card from the handset.
2b. Generation of pictures by the SD card that are displayed on the camera. The user can in return respond to this by for example deleting a picture form the card when proposed by the SD card.
3a. Downloading the specific client software stored in the network dedicated for the specific handset to the handset.
3b. Downloading the specific client software pre-stored in the SD card over the local radio connection to the handset.
4 Real-time upload of pictures to a remote server instead of waiting for the opportunity to have local network access.
5 (Real-time) back-up of pictures taken on a remote server.
6 User selection on the handset of the picture(s) that needs to be uploaded from the camera to the remote server.
7 User selection on the handset for downloading the high-resolution picture from the server to a PC or handset.

Additional details, features and advantages of the invention are presented in greater detail hereafter in the context which follows with reference to the illustrative embodiment shown in the drawing, in which:

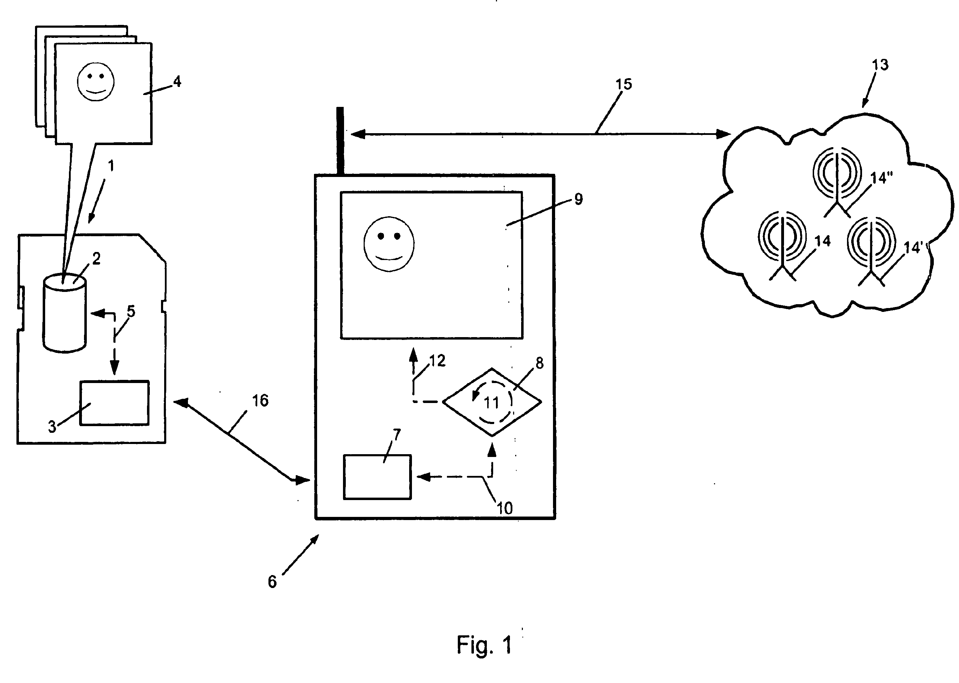

- Fig. 1: shows an illustrative embodiment of a data modification according to the invention in a basic schematic diagram.

Fig. 1 shows a data storage device 1 having a data storage 2 for storing data and a transceiver device 3 enabling a wireless communication connection. In the present embodiment the data storage device 1 is accordant a SD-card form format respectively standard and the transceiver device 3 enables a communication connection accordant a Bluetooth-standard. The data storage 2 comprise inter alia other data pictures respectively data of pictures of a dialogue of an interface with a picture comprising dialogue for modifying data, said pictures of said dialogue represented symbolically by the speech bubble designated with reference 4. The data storage 2 is connected with the transceiver device 3 for transmitting data stored on the part of the data storage 2 with the transceiver device 3 via a wireless communication connection. Transmission of data between the storage area 2 and the transceiver device 3 is in the present case represented symbolically by the interrupted line designated with reference 5.

Fig. 1 further shows a mobile device 6 for usage in a mobile network 13 according to a GSM-, GPRS- and/or UMTS-cellular network standard, comprising network nodes, in the present case represented symbolically by the antennas designated with reference 14, 14' and 14". The usage of the mobile device 6 within the mobile network 13 is in the present case represented symbolically by the line designated with reference 15.

The mobile device 6 is a handset in form of a telephone, having units for signaling information in optical and or acoustic manner, for example with a display 9 and/or speakers. The mobile device 6 comprises a transceiver device 7 enabling respectively allowing a wireless communication connection, a processing unit 8 for processing data, a data storage for storing data (not shown explicit) and a transceiver device (not shown explicit) enabling respectively allowing a wireless communication connection according to a GSM-, GPRS-and/or UMTS-cellular network standard within the mobile network 13. The transceiver device 7 is connected with the processing unit 8. Transmission of data between the transceiver device 7 and the processing unit 8 is in the present case represented symbolically by the interrupted line designated with reference 10. The processing unit 8 especially forms and/or controls the inventive interface with a picture comprising dialogue for modifying data. Presently the processing unit especially signalizes pictures 4 of the dialogue of the inventive interface, which pictures were generated by the data storage device 1, on part of the display 9 of the mobile device 6. The processing of data (data processing) within the processing unit 8 in doing so is in the present case represented symbolically by the interrupted line designated with reference 11. In the present embodiment the processing unit 8 is connected with the display 9. Transmission of data from the processing unit 8 to the display 9 is in the present case represented symbolically by the interrupted line designated with reference 12.

Data stored on the part of the storage area 2 of the data storage device 1 are transmitted automatically to the transceiver device 3 for transmitting to the mobile device 6 depending on the necessary requirements and/or requests of the interface with the picture comprising dialogue for modifying data. Such data is then received from the mobile device 6 by using the wireless communication connection 16 between the transceiver device 7 of the mobile device 6 and the transceiver device 3 of the data storage device 1. Relative data is then transmitted (transmission 10) between the transceiver device 7 and the processing unit 8. The data is then processed (processing 11) within the processing unit 8, which leads to displaying (transmission 12) the dialogue pictures 4 on the display, preferably depending on the relative dialogue situation.

The described embodiments of the invention and the embodiments of the invention illustrated in connection with the figure serve only to explain the invention and are not restrictive with respect to it.

### List of reference designations:

- 1: data storage device (SD-card format)
- 2: data storage (flash memory)
- 3: transceiver (Bluetooth)
- 4: dialogue pictures/data of dialogue pictures (data storage (2))
- 5: transmission data (data storage (2) <=> transceiver (3))
- 6: mobile device (handset)
- 7: transceiver (Bluetooth)
- 8: processing unit (mobile device (6))
- 9: display (mobile device (6))
- 10: transmission data (transceiver (5) <=> processing unit (8))
- 11: processing data (processing unit (8))
- 12: transmission data (processing unit (8) => data storage (7))
- 13: mobile network
- 14: node (mobile network (13))
- 14': node (mobile network (13))
- 14": node (mobile network (13))
- 15: communication connection (mobile device (6) <=> mobile network (13))
- 16: transmission data (transceiver (3) <=> transceiver (7))

## Claims

1. Method for modifying at least a part of data stored on the part of a card-shaped data storage device (1)
by using a wireless communication connection
between
a transceiver device (3) of the data storage device (1)
and
a transceiver device (7) of a mobile device (6) being operable in a mobile network (13),
which transceiver devices (3, 7) enable a corresponding wireless communication connection,
**characterized in**
an interface with a picture comprising dialogue for modifying data stored at the data storage device (1),
where
modification of data stored at the data storage device (1) is carried out by the mobile device (6) by using the wireless connection, and
pictures (4) of the dialogue
are generated by the storage device (1)
and/or
are downloaded to the data storage device (1) from the mobile device (6) via the wireless communication connection between the storage device (1) and the mobile device (6).

2. Method according to claim 1, **characterized in that** said pictures (4) of said dialogue are displayed on part of a display of a device using the data storage device (1), especially on part of a display of a digital camera using the data storage device (1).

3. Method according to claim 1 or 2, **characterized in that** said pictures (4) of said dialogue are displayed on part of a display (9) of the mobile device (6) via the wireless communication connection between the storage device (1) and the mobile device (6).

4. Method according to claims 1 to 3, **characterized in that** the modifying of data comprises at least partially editing data, transforming data, packing respectively compressing data, unpacking respectively uncompressing data and/or fitting additional information to the data.

5. Method according to claim 4, **characterized by** a usage and/or determination of at least one attribute of at least one part of the data as additional information, particularly comprising information of time, information of location, information of utilization and/or suchlike information.

6. Method according to claims 1 to 5, **characterized in that** the interface is generated by an administration-application executed on part of the data storage device (1) and/or on part of the mobile device (6).

7. Method according to claim 6, **characterized in that** an algorithm of the administration-application executed on part of the data storage device (1) and/or on part of the mobile device (6) is stored on part of the data storage device (1).

8. Method according to claim 7, **characterized in that** the algorithm of the administration-application is received by the mobile device (6) via the wireless communication connection between the mobile device (6) and the data storage device (1).

9. Method according to claims 1 to 8, **characterized by** a wireless communication connection according to a Bluetooth-standard.

10. Method according to claims 1 to 9, **characterized in that** the data represent digital image- and/or sound-information, especially in form of digital photographs.

11. Card-shaped data storage device (1) with at least one storage area (2) for storing data and a transceiver device (3) enabling a wireless communication connection with a mobile device (6), **characterized in that** said data storage device (1) is arranged to enable modification of the stored data by the mobile device (6) by using the wireless connection and arranged to generate pictures for a dialogue, which dialogue is part of an interface for modifying data, and/or to download said pictures from the mobile device (6) via the wireless communication connection.

12. Data storage device (1) according to claim 11 **characterized in that** on the part of a storage area (2) for storing data an algorithm based on an administration application which is executable on the part of the mobile device (6) is stored.

13. Data storage device (1) according to claim 11 or claim 12, **characterized in** an administration-application that offers the possibility for processing data, especially with regard to editing, transforming, packing respectively compressing, unpacking respectively uncompressing and/or fitting additional information to the data, especially information regarding time, location and/or utilization.

14. Data storage device (1) according to claims 11 to 13, **characterized in that** the transceiver device (3) is a transceiver device (3) allowing a wireless communication connection according to a Bluetooth-standard.

15. Data storing device (1) according to claims 11 to 14, **characterized in that** the storage area (2) is realized by the use of at least one flash-memory.

16. Data storing device (1) according to claims 11 to 15, **characterized in that** it is particularly designed of a format according to Secure Digital (SD), Multi Media Card (MMC), Compact Flash (CF), Memory Stick (MS), Smart Media Card (MMD), xD Picture Card (xD) or Universal Flash Storage (USF).

17. Mobile device (6) for usage in a mobile network (13), especially a mobile network (13) according to a GSM-, GPRS- and/or UMTS-cellular network standard, comprising a transceiver device (7) allowing a wireless communication connection with a card-shaped data storage device, **characterized in that** the mobile device (6) is arranged to modify data stored at the card-shaped data storage device (1) by using the wireless connection and arranged to download to the data storage device by using the wireless connection pictures for a dialogue, which dialogue is part of an interface for modifying data.

18. Mobile device (6) according to claim 17, **characterized by** an administration application executable on the part of the mobile device (6).

19. Mobile device (6) according to claim 18, **characterized in that** the an algorithm based on the administration-application which is executable on part of the mobile device (6) is stored on the part of a data storage of the mobile device (6).

20. Mobile device (6) according to claims 18 or 19, **characterized in that** the administration application offers the possibility to process data, especially with regard to editing, transforming, packing respectively compressing, unpacking respectively uncompressing and/or fitting additional information to the data, especially information regarding time, location and/or utilization.

21. Mobile device (6) according to claims 17 to 20, **characterized in that** the transceiver device (7) is a transceiver device (7) allowing a wireless communication connection according to a Bluetooth-standard.

## Patentansprüche

1. Verfahren zum Modifizieren von wenigstens einem Teil von seitens einer kartenförmigen Datenspeichereinrichtung (1) gespeicherten Daten unter Nutzung einer drahtlosen Kommunikationsverbindung
zwischen
einer Sende-/Empfangseinrichtung (3) der Datenspeichereinrichtung (1)
und
einer Sende-/Empfangseinrichtung (7) eines mobilen Endgerätes (6), welches in einem Mobilfunknetz (13) betreibbar ist,
wobei die Sende-/Empfangseinrichtungen (3, 7) eine entsprechende drahtlose Kommunikationsverbindung ermöglichen,
**gekennzeichnet durch**
eine Schnittstelle mit einem Bilder umfassenden Dialog zum Modifizieren von seitens der Datenspeichereinrichtung (1) gespeicherten Daten,
wobei
die Modifikation der auf der Datenspeichereinrichtung (1) gespeicherten Daten von dem mobilen Endgerät (6) unter Nutzung der drahtlosen Kommunikationsverbindung ausgeführt wird und
Bilder (4) des Dialoges
seitens der Datenspeichereinrichtung (1) erzeugt werden
und/oder
über die zwischen der Datenspeichereinrichtung (1) und dem mobilen Endgerät (6) bestehende drahtlose Kommunikationsverbindung
von dem mobilen Endgerät (6) auf die Datenspeichereinrichtung (1) heruntergeladen werden.

2. Verfahren nach Anspruch 1, **dadurch gekennzeichnet, dass** die Bilder (4) des Dialoges seitens einer Anzeigeeinrichtung eines die Datenspeichereinrichtung (1) nutzenden Endgerätes angezeigt werden, insbesondere seitens einer Anzeigeeinrichtung einer die Datenspeichereinrichtung (1) nutzenden Digitalkamera.

3. Verfahren nach Anspruch 1 oder Anspruch 2, **dadurch gekennzeichnet, dass** die Bilder (4) des Dialoges seitens einer Anzeigeeinrichtung (9) des mobilen Endgerätes (6) unter Nutzung der drahtlosen Kommunikationsverbindung zwischen der Datenspeichereinrichtung (1) und dem mobilen Endgerät (6) angezeigt werden.

4. Verfahren nach einem der Ansprüche 1 bis 3, **dadurch gekennzeichnet, dass** das Modifizieren der Daten wenigstens teilweise ein Editieren der Daten, ein Umwandeln der Daten, ein Komprimieren der Daten, ein Dekomprimieren der Daten und/oder ein Einfügen von zusätzlichen Informationen zu den Daten umfasst.

5. Verfahren nach Anspruch 4 **gekennzeichnet durch** eine Nutzung und/oder eine Bestimmung von wenigstens einer Eigenschaft von wenigstens einem Teil der Daten als zusätzliche Information, vorzugsweise umfassend eine Zeitinformation, eine Ortsinformation, eine Verwendungsinformation und/oder dergleichen Information.

6. Verfahren nach einem der Ansprüche 1 bis 5, **dadurch gekennzeichnet, dass** die Schnittstelle von einer Administrationsanwendung erzeugt wird, welche seitens der Datenspeichereinrichtung (1) und/oder seitens des mobilen Endgerätes (6) ausgeführt wird.

7. Verfahren nach Anspruch 6, **dadurch gekennzeichnet, dass** ein Algorithmus der Administrationsanwendung, welcher seitens der Datenspeichereinrichtung (1) und/oder seitens des mobilen Endgerätes (6) ausgeführt wird, seitens der Datenspeichereinrichtung (1) gespeichert ist.

8. Verfahren nach Anspruch 7, **dadurch gekennzeichnet, dass** der Algorithmus der Administrationsanwendung von dem mobilen Endgerät (6) über die zwischen dem mobilen Endgerät (6) und der Datenspeichereinrichtung (1) bestehende drahtlose Kommunikationsverbindung empfangen wird.

9. Verfahren nach einem der Ansprüche 1 bis 8 **gekennzeichnet durch** eine drahtlose Kommunikationsverbindung gemäß einem Bluetooth-Standard.

10. Verfahren nach einem der Ansprüche 1 bis 9, **dadurch gekennzeichnet, dass** die Daten digitale Bildinformationen und/oder akustische Informationen darstellen, insbesondere in Form von digitalen Photographien.

11. Kartenförmige Datenspeichereinrichtung (1) mit wenigstens einem Speicherbereich (2) zum Speichern von Daten und einer Sende-/Empfangseinrichtung (3), welche den Aufbau einer drahtlosen Kommunikationsverbindung mit einem mobilen Endgerät (6) ermöglicht, **dadurch gekennzeichnet, dass** die Datenspeichereinrichtung (1) ausgebildet ist, ein Modifizieren der gespeicherten Daten mittels des mobilen Endgerätes (6) unter Nutzung der drahtlosen Kommunikationsverbindung zu ermöglichen, und ausgebildet ist, Bilder für einen Dialog zu erzeugen und/oder Bilder für eine Dialog von dem mobilen Endgerät (6) über die drahtlose Kommunikationsverbindung herunterzuladen, wobei der Dialog Teil einer Schnittstelle zum Modifizieren von Daten ist.

12. Datenspeichereinrichtung (1) nach Anspruch 11, **dadurch gekennzeichnet, dass** seitens eines Speicherbereichs (2) zum Speichern von Daten ein auf einer Administrationsanwendung basierender Algorithmus gespeichert ist, welcher seitens des mobilen Endgerätes (6) ausführbar ist.

13. Datenspeichereinrichtung (1) nach Anspruch 11 oder Anspruch 12 **gekennzeichnet durch** eine Administrationsanwendung, welche ein Verarbeiten von Daten ermöglicht, insbesondere hinsichtlich eines Editierens, Umwandelns, Komprimierens, Dekomprimierens und/oder eines Einfügens von zusätzlichen Daten, insbesondere von Informationen bezüglich Zeit, Ort und/oder Verwendung.

14. Datenspeichereinrichtung (1) nach einem der Ansprüche 11 bis 13, **dadurch gekennzeichnet, dass** die Sende-/Empfangseinrichtung (3) eine drahtlose Kommunikationsverbindung gemäß einem Bluetooth-Standard erlaubt.

15. Datenspeichereinrichtung (1) nach einem der Ansprüche 11 bis 14, **dadurch gekennzeichnet, dass** der Speicherbereich (2) mittels wenigstens eines Flash-Speichers realisiert ist.

16. Datenspeichereinrichtung (1) gemäß einem der Ansprüche 11 bis 15, **dadurch gekennzeichnet, dass** diese entsprechend einem Format gemäß Secure Digital (SD), Multi Media Card (MMC), Compact Flash (CF), Memory Stick (MS), Smart Media Card (MMD), xD Picture Card (xD) oder Universal Flash Storage (UFS) ausgestaltet ist.

17. Mobiles Endgerät (6) zum Betrieb in einem Mobilfunknetz (13), insbesondere einem Mobilfunknetz (13) gemäß einem GSM-, GPRS- und/oder einem UMTS-Mobilfunknetzstandard, aufweisend eine Sende-/Empfangseinrichtung (7), welche den Aufbau einer drahtlosen Kommunikationsverbindung mit einer kartenförmigen Speichereinrichtung ermöglicht, **dadurch gekennzeichnet, dass** das mobile Endgerät (6) ausgebildet ist, auf der Datenspeichereinrichtung (1) gespeicherte Daten unter Nutzung der drahtlosen Kommunikationsverbindung zu modifizieren, und ausgebildet ist, unter Nutzung der drahtlosen Kommunikationsverbindung Bilder für einen Dialog auf die Datenspeichereinrichtung (1) zu übertragen, wobei der Dialog Teil einer Schnittstelle zum Modifizieren von Daten ist.

18. Mobiles Endgerät (6) nach Anspruch 17 **gekennzeichnet durch** eine Administrationsanwendung, welche seitens des mobilen Endgerätes (6) ausführbar ist.

19. Mobiles Endgerät (6) nach Anspruch 18, **dadurch gekennzeichnet, dass** seitens eines Datenspeichers des mobilen Endgerätes (6) ein auf einer Administrationsanwendung basierender Algorithmus gespeichert ist, welcher seitens des mobilen Endgerätes (6) ausführbar ist.

20. Mobiles Endgerät (6) nach Anspruch 18 oder Anspruch 19, **dadurch gekennzeichnet, dass** die Administrationsanwendung ein Verarbeiten von Daten ermöglicht, insbesondere hinsichtlich eines Editierens, Umwandelns, Komprimierens, Dekomprimierens und/oder eines Einfügens von zusätzlichen Daten, insbesondere von Informationen bezüglich Zeit, Ort und/oder Verwendung.

21. Mobiles Endgerät (6) nach einem der Ansprüche 17 bis 20, **dadurch gekennzeichnet, dass** die Sende-/Empfangseinrichtung eine drahtlose Kommunikationsverbindung gemäß einem Bluetooth-Standard erlaubt.

## Revendications

1. Procédé de modification d'au moins une partie de données mémorisées par un dispositif de mémorisation de données (1) sous forme de carte en utilisant une connexion de communication sans fil
entre
un dispositif émetteur-récepteur (3) du dispositif de mémorisation de données (1)
et
un dispositif émetteur-récepteur (7) d'un terminal mobile (6) qu'on peut actionner dans un réseau mobile (13),
les dispositifs émetteur-récepteur (3, 7) permettant une connexion de communication sans fil correspondante,
**caractérisé par**
une interface avec un dialogue comprenant des images pour modifier des données mémorisées par le dispositif de mémorisation de données (1), dans lequel
la modification des données mémorisées au dispositif de mémorisation de données (1) est réalisée par le terminal mobile (6) en utilisant la connexion de communication sans fil et
des images (4) du dialogue
sont générées par le dispositif de mémorisation de données (1) et/ ou
sont téléchargées du terminal mobile (6) au dispositif de mémorisation de données (1)
via la connexion de communication sans fil établie entre le dispositif de mémorisation de données (1) et le terminal mobile (6).

2. Procédé selon la revendication 1, **caractérisé en ce que** les images (4) du dialogue sont affichées par moyen d'un dispositif d'affichage d'un terminal qui utilise le dispositif de mémorisation de données (1), notamment par moyen d'un dispositif d'affichage d'un appareil photo numérique qui utilise le dispositif de mémorisation de données (1).

3. Procédé selon la revendication 1 ou la revendication 2, **caractérisé en ce que** les images (4) du dialogue sont affichées par moyen d'un dispositif d'affichage (9) du terminal mobile (6) en utilisant la connexion de communication sans fil entre le dispositif de mémorisation de données (1) et le terminal mobile (6).

4. Procédé selon l'une des revendications 1 à 3, **caractérisé en ce que** la modification des données comprend au moins partiellement les opérations d'éditer les données, de transformer les données, de comprimer les données, de décomprimer les données et/ou d'insérer des informations supplémentaires aux données.

5. Procédé selon la revendication 4, **caractérisé par** une utilisation et/ou détermination d'au moins un attribut d'au moins une partie des données en tant que information supplémentaire, de préférence comprenant une information de temps, une information de lieu, une information d'utilisation et/ou une information similaire.

6. Procédé selon l'une des revendications 1 à 5, **caractérisé en ce que** l'interface est générée par une application d'administration qui est exécutée par le dispositif de mémorisation de données (1) et/ou par le terminal mobile (6).

7. Procédé selon la revendication 6, **caractérisé en ce qu'**un algorithme de l'application d'administration qui est exécuté par le dispositif de mémorisation de données (1) et/ou par le terminal mobile (6) est mémorisé par le dispositif de mémorisation de données (1).

8. Procédé selon la revendication 7, **caractérisé en ce que** l'algorithme de l'application d'administration est reçu par le terminal mobile (6) via la connexion de communication sans fil entre le terminal mobile (6) et le dispositif de mémorisation de données (1).

9. Procédé selon l'une des revendications 1 à 8, **caractérisé par** une connexion de communication sans fil selon un standard bluetooth.

10. Procédé selon l'une des revendications 1 à 9, **caractérisé en ce que** les données représentent des informations d'image numériques et/ou des informations acoustiques, notamment sous forme de photographies numériques.

11. Dispositif de mémorisation de données (1) sous forme de carte comprenant au moins une zone de mémoire (2) pour mémoriser des données et un dispositif émetteur-récepteur (3) qui permet d'établir une connexion de communication sans fil avec un terminal mobile (6), **caractérisé en ce que** le dispositif de mémorisation de données (1) est conçu pour permettre une modification des données mémorisées par moyen du terminal mobile (6) en utilisant la connexion de communication sans fil et est conçu pour générer des images pour un dialogue et/ou télécharger des images pour un dialogue du terminal mobile (6) via la connexion de communication sans fil, le dialogue étant une partie d'une interface pour modifier des données.

12. Dispositif de mémorisation de données (1) selon la revendication 11, **caractérisé en ce qu'**un algorithme qui se fonde sur une application d'administration et qui peut être exécuté par le terminal mobile (6) est mémorisé par une zone de mémoire (2) pour la mémorisation de données.

13. Dispositif de mémorisation de données (1) selon la revendication 11 ou la revendication 12, **caractérisé par** une application d'administration qui permet un traitement de données, notamment en vue d'une édition, d'une transformation, d'une compression, d'une décompression et/ou d'une insertion de données supplémentaires, notamment des informations par rapport au temps, au lieu et/ou à l'utilisation.

14. Dispositif de mémorisation de données (1) selon l'une des revendications 11 à 13, **caractérisé en ce que** le dispositif émetteur-récepteur (3) permet une connexion de communication sans fil selon un standard bluetooth.

15. Dispositif de mémorisation de données (1) selon l'une des revendications 11 à 14, **caractérisé en ce que** la zone de mémoire (2) est réalisée par moyen d'au moins une mémoire flash.

16. Dispositif de mémorisation de données (1) selon l'une des revendications 11 à 15, **caractérisé en ce que** celui-ci est notamment conçu dans un format selon Secure Digital (SD), Multi Media Card (MMC), Compact Flash (CF), Memory Stick (MS), Smart Media Card (MMD), xD Picture Card (xD) ou Universal Flash Storage (UFS).

17. Terminal mobile (6) pour l'utilisation dans un réseau mobile (13), notamment un réseau mobile (13) selon un standard de réseau mobile GSM, GPRS et/ou UMTS, comprenant un dispositif émetteur-récepteur (7) qui permet d'établir une connexion de communication sans fil avec un dispositif de mémorisation sous forme de carte, **caractérisé en ce que** le terminal mobile (6) est conçu pour modifier des données mémorisées au dispositif de mémorisation de données (1) en utilisant la connexion de communication sans fil et est conçu pour transmettre des images pour un dialogue au dispositif de mémorisation de données (1) en utilisant la connexion de communication sans fil, le dialogue étant une partie d'une interface pour modifier des données.

18. Terminal mobile (6) selon la revendication 17, **caractérisé par** une application d'administration qui peut être exécutée par le terminal mobile (6).

19. Terminal mobile (6) selon la revendication 18, **caractérisé en ce qu'**un algorithme qui se fonde sur une application d'administration et qui peut être exécuté par le terminal mobile (6) est mémorisé par une mémoire de données du terminal mobile (6).

20. Terminal mobile (6) selon la revendication 18 ou la revendication 19, **caractérisé en ce que** l'application d'administration permet un traitement de données, notamment en vue d'une édition, d'une transformation, d'une compression, d'une décompression et/ou d'une insertion de données supplémentaires, notamment des informations par rapport au temps, au lieu et/ou à l'utilisation.

21. Terminal mobile (6) selon l'une des revendications 17 à 20, **caractérisé en ce que** le dispositif émetteur-récepteur permet une connexion de communication sans fil selon un standard bluetooth.
